# EUROPEAN PATENT SPECIFICATION

(11) **EP 4 153 507 B1**
(45) Date of publication and mention of the grant of the patent: **15.11.2023**
(21) Application number: 21728057.7
(22) Date of filing: 21.05.2021
(51) Int. Cl.: B65D 83/00

(54) **BALL JOINT VALVE**
KUGELGELENKVENTIL
VANNE À JOINT SPHÉRIQUE

(30) Priority: 22.05.2020 BE 202000063
(43) Date of publication of application: 29.03.2023
(73) Proprietor: Altachem NV, 8530 Harelbeke (BE)
(72) Inventor: POPPE, Jean-Marie, 8501 Heule (BE); HALFMAERTEN, Wouter, 8200 Brugge (BE)
(74) Representative: Patentanwaltskanzlei Vièl & Wieske PartGmbB
(86) International application number: PCT/EP2021/063670
(87) International publication number: WO 2021/234153

(56) References cited:
- EP-A1- 1 004 523
- DE-B- 1 037 377
- US-A- 4 165 825
- US-A- 4 444 339
- US-A1- 2015 136 122
- US-A1- 2018 229 920
- US-B1- 6 425 503

## Description

The invention concerns a valve for a container for dispensing pressurized fluid, said valve comprising a housing which is mounted on a valve cup, a hollow stem provided in a passage of the housing which stem has at least one lateral inlet opening at its lower end and an outlet opening at its upper end.

Valves for containers are known.

CA 2 682 061 C describes a valve for a container. The housing of this valve has a circumferential step like contour line and the inner end of the valve cup ends horizontally at the base of the outer lower part of the housing where it is rigidly connected to the base of the housing. The inner part of the valve cup is inserted into the structure of the housing below the lower part thereof.

DE 10 2008 109 224 B4 also concerns a valve assembly for a pressurized fluid container of this type. The housing of this valve has a circumferential step-like contour line with a circumferential protrusion on the outer lower part of the housing against which abuts the vertical inner part of the valve cup.

EP 1 004 523 A1 discloses a valve which fits a container containing a product pressurized by a propellant gas. The valve comprises an elastomer valve body. It has activation members which in response to an activating control move the valve from a closed to an open position allowing dispensing of the product through an outlet passage. The valve body has first mounting members which enable it to be mounted in a first position in which the valve body defines with an edge of the container a passage in communication with the container so as to allow filling the container with a propellant gas. Second mounting members enable the valve to be mounted in a second position in which the valve body is sealed on the container edge.

US 6,425,503 A concerns a valve for a pressurized dispensing container that has one or two dispensing openings through the wall of the valve stem. A dispensing nozzle with an actuating handle has a predetermined alignment with the opening or openings in the valve stem so that actuation of the nozzle will assure that one and only one full opening is presented to the product during dispensing. This keeps the leg or wall area between openings out of the path of the product being dispensed and avoids the build-up of fibre that tends to clog the opening. A small retaining wall between the valve seat.at the bottom of the valve stem and the lower edge of the opening or openings provides a wall that prevents the flexible rubber-like seal from being distorted under pressure and setting in a position where it blocks the opening when product is to be dispensed.

US 4,165,825 A discloses a tiltable valve apparatus for use with pressurized containers in which the valve member is constructed of resilient material and includes a hollow shank with a substantially rigid reinforcing plug therein so that the valve stem can be tilted without bending when pressure is applied to one side for dispensing material from the container.

EP 1 004 523 A1 discloses a valve intended to be fitted to a container containing a product which is pressurized by means of a propellent gas, comprising a valve body made of an elastomeric material and activation means for, in response to an actuation command, causing the valve to move from a closed position into a position which allows the product to be dispensed via an outlet passage of the said valve body, the said valve being, in the absence of any actuation command, forced into the closed position, wherein the valve body comprises first mounting means to allow the valve to be mounted in a first position in which the valve body defines, with an edge of the container, at least one passage allowing communication between the inside and the outside of the container, so as to allow the container to be filled with a propellent gas, and second mounting means, to allow the valve to be mounted in a second position in which the valve body is mounted in a sealed fashion on the said edge of the container.

DE 10 37 377 8 discloses a tilt valve for a spray container having a tube-shaped valve body placed in an elastic valve housing.

The known valves for containers have in common that they are difficult to seal because of the relative motion of the stem and the housing of the valve.

It is an object of the present invention to provide an optimized valve for dispensing pressurized fluids.

This object is achieved according to the invention by a valve in which the lower end of the stem is ball-shaped and forms a ball joint with a correspondingly ball-shaped ball socket being part of the housing, wherein the upper part of the housing is provided with sealing means and the stem is tiltable between a closed position and an open position and in that the stem is provided with a sealing part that abuts the sealing means of the housing.

The lower end of the stem is situated inside the container when the valve is mounted onto the container. This lower end of the stem is ball-shaped, which means that it has at least a spherical segment in the contact area with the socket. The ball-shaped part of the stem fits snugly in a correspondingly shaped socket. The socket has a negative shape which allows a surface contact with the corresponding positive shape of the stem so that the stem can tilt in the socket while a surface contact between the stem and the socket is maintained.

The main advantages of these measures are the following. The pivot point of the stem is fixed in the centre of the ball shape. Due to this fixed position of the pivot point, less force is needed by tilting the stem to open the valve. No filling material of the container has to be forced away to open the valve, allowing an opening of the valve by a lower force. As another advantage, the elastic sealing means of the housing allow a deformation of said sealing means when opening the valve by also providing a force to push back the stem in its closed position.

As an advantage, there is no relative movement of the stem and the housing when the valve is put into an open position by tilting the stem. Therefore, no additional sealing against the entering of water vapour or the loss of filling material of the container or gas is required.

Additionally, the elastic sealing means abut the stem while tilting to ensure a sealing of the valve in all tilting positions of the stem. There can be one or several inlet openings at the lower end of the stem. In the closed position of the stem which is made of hard plastic material abutting against the ball socket of the housing which is also made of hard plastic material closes the inlet openings. This results in a lower gas loss than valves using a rubber sealing and inhibits water vapour from entering the container. This is advantageous, since it is known in the field of dispenser valves that water vapour entering the container can deteriorate the content of the container and lead to undesirable chemical reactions thereof. In the case of polyurethane containers, the polyurethane reacts with the water vapour which leads to the sticking of the dispenser valve.

Depending on the number and position of the inlet openings, the stem can be tilted in in certain directions or in all 360 degrees to open the valve. It is also possible to arrange lateral inlet openings with different diameters around the ball-shaped lower part of the stem. In that way the output flow of material can be varied by the direction in which the stem is tilted.

The ball shape of the lower part of the stem has the additional benefit of being much stronger than a standard valve at the orifices. This allows to use non-filled material for the lower part of the stem.

It is advantageous that an accidental force on the stem, especially a lateral force on the stem, is less likely to damage the stem. The stem can be tilted in an open position by the force, while the sealing means are deformed. A vertical force on the stem deforms the elastic sealing means of the housing, thus the stem is less likely to be damaged.

According to the present invention, the stem is provided with a sealing part that abuts the sealing means of the housing.

This sealing part can be a resting area abutting the sealing means of the housing. This sealing part in connection with the elastic sealing means inhibit the loss of filling material of the container in between the stem and the housing. The resting area pushes against the elastic sealing means of the housing while tilting the stem. As an advantage the sealing means can perform a force on the stem to push the stem into its closed position.

According to a further preferred embodiment, the stem is displaceable between a closed position and an open position and the stem is pushed in the closed position by means of the sealing means pushing against the sealing part of the stem.

The stem can be pushed into an open position by a vertical force on the stem. By pushing down the stem, the sealing means is deformed, and the lateral inlet openings of the ball-shaped lower end of the stem are opened by displacing the stem from the ball socket of the housing. This can be used for the filling of the container with material.

Furthermore, according to the present invention, the sealing means are provided with recesses.

These recesses reduce the force needed to tilt the stem. It also inhibits the loss off filling material and gas of the container and the entering of water vapour into the container while the sealing means are deformed.

According to a further embodiment of the present invention, the upper part of the stem is provided with a thread.

The thread allows an easier mounting of the valve to an actuator.

According to a preferred embodiment of the invention, the valve cup is crimped around the housing wherein the valve cup is positively connected to the sealing means made up of an elastic material.

This means that the valve cup is deformed with a crimping tool around the housing in order to fix it to the housing. The crimping tool may have indentations in order to improve the quality of crimping. Due to the mechanical tension which occurs during the crimping step, the sealing is fixed between the housing and the valve cup and at the same time around the stem. The crimping step which fixes the valve cup to the housing also confers a higher solidity to the valve cup.

According to another preferred embodiment of the invention, the housing is of one piece of plastic and welded onto the cup and the sealing part of the stem is welded to the sealing means of the housing.

The invention also provides a new method of producing a valve according to the invention according to which the housing is welded by ultrasonic welding onto the cup and the sealing part of the stem and the sealing means of the housing are connected by laser-welding.

In this context, it is preferred that the stem is made of a material absorbing a maximum of laser energy, whereas the housing is made of a material that allows the laser beam to traverse the housing and heat up the area of the sealing part of the stem and the sealing means of the housing where the laser welding occurs.

The material of the stem can be e.g. black plastic and the material of the housing could be either semi-transparent (opaque) or transparent in order to allow the laser beam to traverse the housing.

In the following, the invention is discussed more in detail with reference to a preferred embodiment shown in the drawings in which
- Fig.1: shows a perspective view of a first embodiment of a valve according to the present invention mounted to a container,
- Fig.2: shows a cut representation of the valve of Fig. 1,
- Fig.3: shows a cut representation of the valve of Fig. 1 and Fig. 2 in an open position,
- Fig.4: shows a cut representation of the valve of Fig. 1 and Fig. 2 in another open position,
- Fig. 5: shows a side representation of a second embodiment of a valve according to the invention in the closed position,
- Fig. 6: shows a cut representation along the axis B-B of Fig. 5,
- Fig. 7: shows a side representation of the valve according to Fig. 5 and 6 in the open position,
- Fig. 8: shows a cut representation along the axis C-C of Fig. 7.

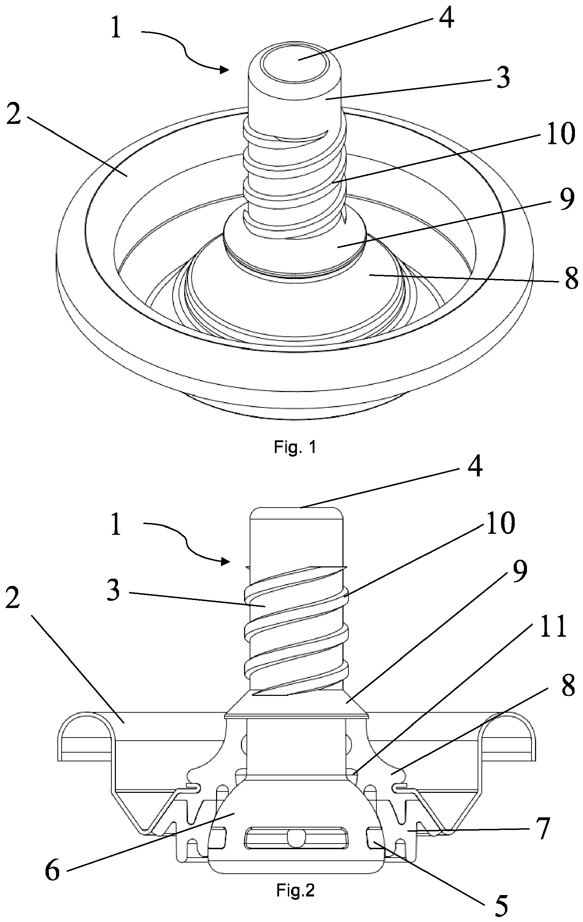

The figures 1 to 4 show a valve 1 mounted on a valve cup 2 of a container.

The valve 1 comprises a housing with a ball socket 7 and sealing means 8 made up of an elastic material and in positive connection with the valve cup 2. The stem comprises a ball-shaped lower end 6 forming a ball joint with the ball socket 7 of corresponding shape. The stem 3 has at least one lateral inlet opening 5 at its lower end 6 and an outlet opening 4 at its upper end forming a passageway for the filling material of the container. The stem has a sealing part 9 that abuts the sealing means 8 and inhibits the loss of filling material and gas and the entering of water vapour into the container in between the housing and the stem 3. The sealing means 8 show multiple recesses 11 which allow an easier deformation of the sealing means 8 when the stem 3 is tilted or pushed in its open position.

In Fig. 2, the valve 1 is shown in its closed position. The inlet openings 5 of the lower end 6 of the stem 3 situated in the container abut in the closed position the ball socket 7 thereby closing the passageway through the stem 3.

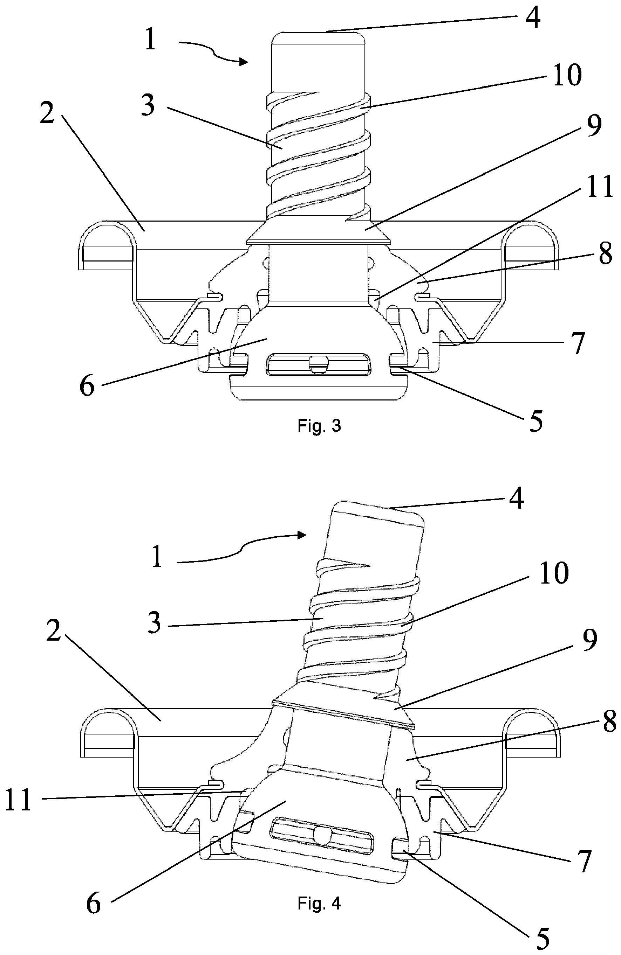

In Fig. 3, the valve 1 is shown in an open position. The stem 3 is pushed downward therefore compressing the sealing means 8 via the sealing part 9 and the inlet openings 5 are displaced from the ball socket 7 thereby opening the passageway through the stem 3. This can be used for filling the container via the valve 1.

In Fig. 4, the valve 1 is shown in an open position. The stem 3 is tilted and deforming the sealing means 8. The tilting of the stem 3 makes rotating the ball-shaped lower end 6 of the stem 3 in the ball socket 7. As a result, the inlet openings 5 are losing the contact to the ball socket 7. Therefore, the passageway through the stem 3 is opened.

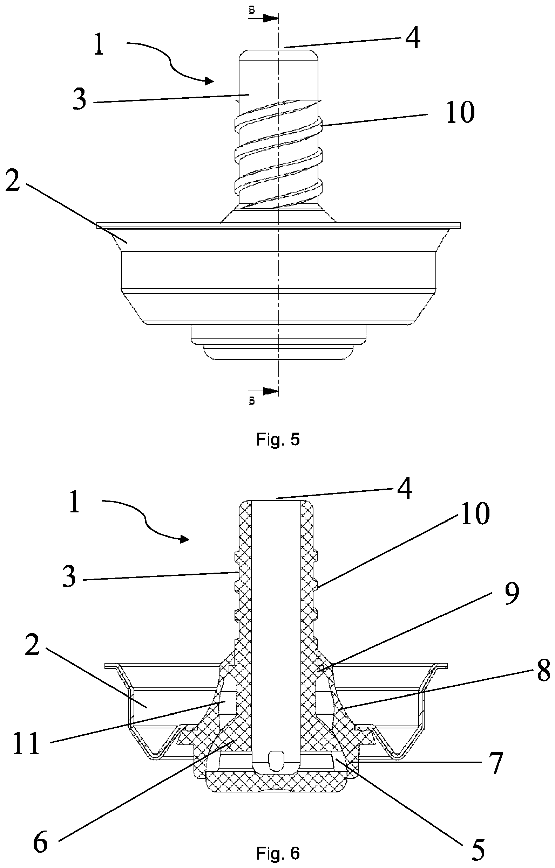

The valve of Fig. 5 to 8 comprises a one-piece housing with a ball socket 7 in its lower part and sealing means 8 in positive connection with the valve cup 2. The stem comprises a ball-shaped lower end 6 forming a ball joint with the ball socket 7 of corresponding shape. The stem 3 has at least one lateral inlet opening 5 at its lower end 6 and an outlet opening 4 at its upper end forming a passageway for the filling material of the container. The stem has a sealing part 9 that abuts the sealing means 8 and inhibits the loss of filling material and gas and the entering of water vapour into the container in between the housing and the stem 3.

The valve according to Fig. 5 to 8 can be made of plastic without use of elastic materials such as rubber or TPE. The properties of the plastic materials are used for providing a hinge or joint.

Preferably, the housing is welded by ultrasonic welding onto the cup 2.

The sealing part 9 of the stem 3 and the sealing means 8 of the housing are preferably connected by laser-welding. In this case, the stem 3 is preferably black in order to absorb a maximum of laser energy, whereas the housing is semi-transparent (opaque) or transparent so that the laser beam can traverse the housing and heat up the area of the sealing part 9 of the stem 3 and the sealing means of the housing where the laser welding occurs.

In Fig. 5 and 6, the valve 1 is shown in its closed position. The inlet openings 5 of the lower end 6 of the stem 3 situated in the container abut in the closed position the ball socket 7 thereby closing the passageway through the stem 3.

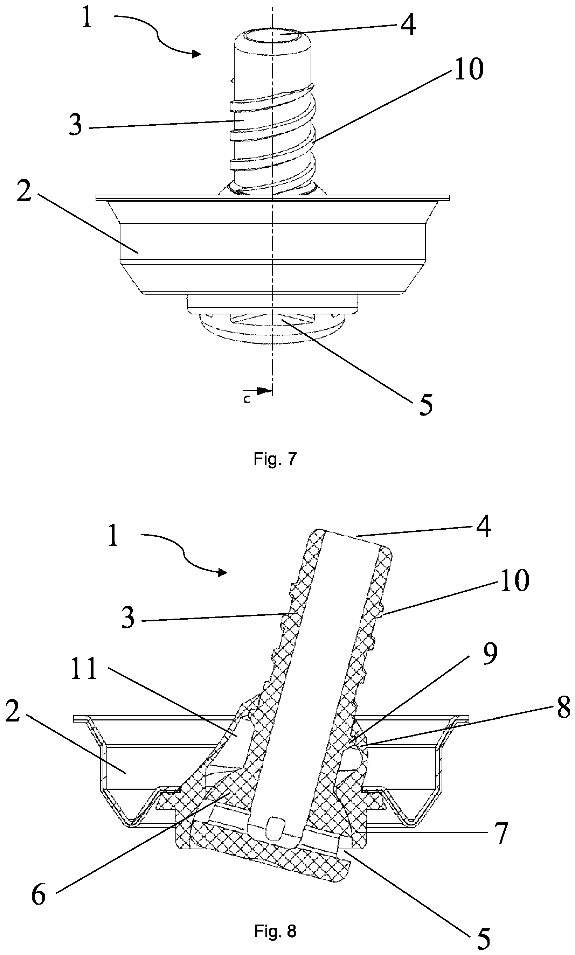

In Fig. 7 and 8, the valve 1 is shown in an open position. The stem 3 is tilted and deforms the sealing means 8. The tilting of the stem 3 makes rotating the ball-shaped lower end 6 of the stem 3 in the ball socket 7. As a result, the inlet openings 5 are losing the contact to the ball socket 7. Therefore, the passageway through the stem 3 is opened.

## Claims

1. Valve (1) for a container for dispensing pressurized fluid, said valve (1) comprising a housing which is mounted on a valve cup (2), a hollow stem (3) provided in a passage of the housing which stem (3) has at least one lateral inlet opening (5) at its lower end and an outlet opening (4) at its upper end, **characterized in that** the lower end of the stem (6) is ball-shaped and forms a ball joint with a correspondingly ball-shaped ball socket (7) being part of the housing, wherein the upper part of the housing is provided with sealing means (8) and the stem (3) is tiltable between a closed position and an open positionand **in that** the stem (3) is provided with a sealing part (9) that abuts the sealing means (8) of the housing.

2. Valve (1) according to claim 1, **characterized in that** the stem (3) is displaceable between a closed position and an open position and the stem (3) is pushed in the closed position by means of the sealing means (8) pushing against the sealing part (9) of the stem.

3. Valve (1) according to one of the previous claims, **characterized in that** the sealing means (8) are provided with recesses (11).

4. Valve (1) according to one of the previous claims, **characterized in that** the upper part of the stem (3) is provided with a thread (10).

5. Valve (1) according to one of the preceding claims, **characterized in that** the valve cup (2) is crimped around the housing wherein the valve cup (2) is positively connected to the sealing means (8) made up of an elastic material.

6. Valve (1) according to one of the preceding claims, **characterized in that** the housing is of one piece of plastic and welded onto the cup (2) and the sealing part (9) of the stem (3) is welded to the sealing means (8) of the housing.

7. Method for producing a valve according to one of the preceding claims, **characterized in that** the housing is welded by ultrasonic welding onto the cup (2) and the sealing part (9) of the stem (3) and the sealing means (8) of the housing are connected by laser-welding.

8. Method according to claim 7, **characterized in that** the stem (3) that the stem is made of a material absorbing a maximum of laser energy, whereas the housing is made of a material that allows the laser beam to traverse the housing and heat up the area of the sealing part (9) of the stem (3) and the sealing means (8) of the housing where the laser welding occurs.

## Patentansprüche

1. Ventil (1) für einen Behälter zur Abgabe von unter Druck stehendem Fluid, wobei das Ventil (1) ein Gehäuse umfasst, das auf einem Ventilteller (2) montiert ist, einen hohlen Schaft (3), der in einem Durchgang des Gehäuses vorgesehen ist, wobei der Schaft (3) mindestens eine seitliche Einlassöffnung (5) an seinem unteren Ende und eine Auslassöffnung (4) an seinem oberen Ende aufweist, **dadurch gekennzeichnet, dass** das untere Ende des Schafts (6) kugelförmig ist und ein Kugelgelenk mit einer entsprechend kugelförmigen Kugelpfanne (7) bildet, die Teil des Gehäuses ist, wobei der obere Teil des Gehäuses mit Dichtungsmitteln (8) versehen ist und der Schaft (3) zwischen einer geschlossenen Position und einer offenen Position kippbar ist, und dass die Spindel (3) mit einem Dichtungsteil (9) versehen ist, der an den Dichtungsmitteln (8) des Gehäuses anliegt.

2. Ventil (1) nach Anspruch 1, **dadurch gekennzeichnet, dass** der Schaft (3) zwischen einer geschlossenen Position und einer offenen Position verschiebbar ist und der Schaft (3) in die geschlossene Position mittels des Dichtungsmittels (8) gedrückt wird, das gegen das Dichtungsteil (9) des Schafts drückt.

3. Ventil (1) nach einem der vorhergehenden Ansprüche, **dadurch gekennzeichnet, dass** die Dichtungsmittel (8) mit Ausnehmungen (11) versehen sind.

4. Ventil (1) nach einem der vorhergehenden Ansprüche, **dadurch gekennzeichnet, dass** der obere Teil des Schaftes (3) mit einem Gewinde (10) versehen ist.

5. Ventil (1) nach einem der vorhergehenden Ansprüche, **dadurch gekennzeichnet, dass** der Ventilteller (2) um das Gehäuse gepresst ist, wobei der Ventilteller (2) formschlüssig mit dem aus einem elastischen Material bestehenden Dichtungsmittel (8) verbunden ist.

6. Ventil (1) nach einem der vorhergehenden Ansprüche, **dadurch gekennzeichnet, dass** das Gehäuse aus einem Stück Kunststoff besteht und mit dem Topf (2) verschweißt ist und das Dichtungsteil (9) des Schaftes (3) mit dem Dichtungsmittel (8) des Gehäuses verschweißt ist.

7. Verfahren zur Herstellung eines Ventils nach einem der vorhergehenden Ansprüche, **dadurch gekennzeichnet, dass** das Gehäuse durch Ultraschallschweißen mit dem Ventilteller (2) verschweißt wird und das Dichtungsteil (9) des Schafts (3) und das Dichtungsmittel (8) des Gehäuses durch Laserschweißen verbunden werden.

8. Verfahren nach Anspruch 7, **dadurch gekennzeichnet, dass** der Schaft (3) aus einem Material besteht, das ein Maximum an Laserenergie absorbiert, während das Gehäuse aus einem Material besteht, das es dem Laserstrahl ermöglicht, das Gehäuse zu durchqueren und den Bereich des Dichtungsteils (9) des Schafts (3) und der Dichtungsmittel (8) des Gehäuses, in dem das Laserschweißen stattfindet, zu erwärmen.

## Revendications

1. Valve (1) pour un récipient destiné à distribuer un fluide sous pression, ladite valve (1) comprenant un boîtier monté sur une coupelle de valve (2), une tige creuse (3) prévue dans un passage du boîtier, laquelle tige (3) présente au moins une ouverture d'entrée latérale (5) à son extrémité inférieure et une ouverture de sortie (4) à son extrémité supérieure, **caractérisée en ce que** l'extrémité inférieure de la tige (6) est de forme sphérique et forme un joint à rotule avec une douille en forme de balle de forme sphérique correspondante (7) faisant partie du boîtier, la partie supérieure du boîtier étant pourvue de moyens d'étanchéité (8), et la tige (3) étant inclinable entre une position fermée et une position ouverte, et **en ce que** la tige (3) est pourvue d'une partie d'étanchéité (9) qui vient en butée contre les moyens d'étanchéité (8) du boîtier.

2. Valve (1) selon la revendication 1, **caractérisée en ce que** la tige (3) est déplaçable entre une position fermée et une position ouverte, et la tige (3) est poussée en position fermée par le moyen d'étanchéité (8) qui pousse contre la partie d'étanchéité (9) de la tige.

3. Valve (1) selon l'une des revendications précédentes, **caractérisée en ce que** les moyens d'étanchéité (8) sont pourvus de renfoncements (11).

4. Valve (1) selon l'une des revendications précédentes, **caractérisée en ce que** la partie supérieure de la tige (3) est pourvue d'un filetage (10).

5. Valve (1) selon l'une des revendications précédentes, **caractérisée en ce que** la coupelle de valve (2) est sertie autour du boîtier, la coupelle de valve (2) étant reliée par complémentarité de formes aux moyens d'étanchéité (8) constitués d'un matériau élastique.

6. Valve (1) selon l'une des revendications précédentes, **caractérisée en ce que** le boîtier est d'une seule pièce en plastique et soudé sur la coupelle (2), et la partie d'étanchéité (9) de la tige (3) est soudée aux moyens d'étanchéité (8) du boîtier.

7. Procédé de fabrication d'une valve selon l'une des revendications précédentes, **caractérisé en ce que** le boîtier est soudé par soudage à ultrasons sur la coupelle (2), et la partie d'étanchéité (9) de la tige (3) et les moyens d'étanchéité (8) du boîtier sont reliés par soudage au laser.

8. Procédé selon la revendication 7, **caractérisé en ce que** la tige (3) est faite d'un matériau absorbant un maximum d'énergie laser, tandis que le boîtier est fait d'un matériau permettant au faisceau laser de traverser le boîtier et de chauffer la zone de la partie d'étanchéité (9) de la tige (3) et des moyens d'étanchéité (8) du boîtier là où se produit le soudage au laser.
